# EUROPEAN PATENT SPECIFICATION

(11) **EP 4 000 906 B1**
(45) Date of publication and mention of the grant of the patent: **03.09.2025**
(21) Application number: 20839764.6
(22) Date of filing: 16.07.2020
(51) Int. Cl.: B29C 65/06, B29C 65/14, B29C 65/20, B29C 65/72, B29C 65/78, B29C 65/82, B29K 67/00, B29K 105/00, B29D 23/00

(54) **METHOD FOR MANUFACTURING WELDED MOLDING, WELDED MOLDING, AND PIPE**
VERFAHREN ZUR HERSTELLUNG EINES GESCHWEISSTEN FORMKÖRPERS, GESCHWEISSTER FORMKÖRPER UND ROHR
PROCÉDÉ DE FABRICATION D'UN MOULAGE SOUDÉ, MOULAGE SOUDÉ ET TUYAU

(30) Priority: 17.07.2019 JP 2019131629
(43) Date of publication of application: 25.05.2022
(73) Proprietor: SUMITOMO CHEMICAL COMPANY, LIMITED, Tokyo 103-6020 (JP)
(72) Inventor: SAKAI,Taiga, Ibaraki 300-3294 (JP)
(74) Representative: Vossius & Partner Patentanwälte Rechtsanwälte mbB
(86) International application number: PCT/JP2020/027669
(87) International publication number: WO 2021/010436

(56) References cited:
- EP-A1- 1 595 906
- WO-A1-2018/179861
- WO-A1-2018/179861
- WO-A1-2018/179862
- WO-A1-2018/179862
- JP-A- 2005 320 478
- JP-A- 2005 320 478
- JP-A- 2017 047 617
- JP-A- H03 184 830
- JP-A- H03 184 830
- JP-A- H11 240 073
- JP-A- H11 240 073
- US-A1- 2016 052 565

## Description

### [Technical Field]

The present invention relates to a method for manufacturing a welded molding, a welded molding, and a pipe.

### [Background Art]

In general, a resin molding having the complicated shape is manufactured by injection molding each of components constituting a target resin molding and thereafter welding the components to each other (refer to, for example, Patent Documents 1 and 2). Examples of the "resin molding having the complicated shape" include a pipe inside which a fluid flows. Furthermore, as a formation material of such a resin molding, a thermoplastic resin is used.

Patent Document 3 discloses a hollow structure body having a hollow structure which comprises a fiber-reinforced resin material, the resin comprising liquid crystal polyester.

Patent Document 4 discloses a resin molding method in which joining surfaces of resin are welded after the joining surfaces are treated with a surface treating agent having a lubricity.

### [Citation List]

### [Patent Documents]

[Patent Document 1]
   Japanese Unexamined Patent Application, First Publication No. 2018-171712
[Patent Document 2]
   Japanese Unexamined Patent Application, First Publication No. 2007-169379
[Patent Document 3]
   US 2016/052565 A1
[Patent Document 4]
   JP H11 240073 A

### [Summary of Invention]

### [Technical Problem]

Among thermoplastic resins, liquid crystal polyester has excellent melting fluidity, heat resistance, strength, and rigidity, and therefore is used as an injection molding material for manufacturing electrical and electronic components. Taking advantage of these characteristics, liquid crystal polyester has been adopted for electrical and electronic components, mechanical components, and the like, and usage applications thereof are expanding.

However, liquid crystal polyester has a high solidification rate at the time of melting, and solidifies while interface flow occurs at a joint interface at the time of welding. Therefore, a new interface is generated on a joint surface, and it is difficult to join. That is, even when an attempt is made to weld a plurality of moldings formed from liquid crystal polyester, the strength of welded parts is likely to be insufficient, and improvement has been required.

The present invention has been made in view of such circumstances, and an object of the present invention is to provide a method for manufacturing a welded molding by which a welded molding can be suitably manufactured by using liquid crystal polyester as a formation material. Another object of the present invention is to provide a welded molding in which the strength of welded parts is secured. Still another object of the present invention is to provide a highly reliable pipe that is a welded molding made of liquid crystal polyester as a formation material.

### [Solution to Problem]

In order to achieve the above-mentioned objects, the present invention includes the following aspects: a method for manufacturing a welded molding according to claim 1 and a welded molding according to claim 5. Preferred embodiments of the invention are defined in the claims which depend thereon.

According to the present invention, it is possible to provide a method for manufacturing a welded molding which can suitably manufacture a welded molding by using liquid crystal polyester as a formation material. Furthermore, it is possible to provide a welded molding in which the strength of welded parts is secured. Furthermore, it is possible to provide a highly reliable pipe that is a welded molding made of liquid crystal polyester as a formation material.

### [Brief Description of Drawings]

Fig. 1 is a schematic perspective view showing a welded molding according to an embodiment.
Fig. 2 is an arrow cross-sectional view taken along the line segment II-II of Fig. 1.
Fig. 3 is an arrow cross-sectional view taken along the line segment III-III of Fig. 1.
Fig. 4 is a schematic view showing a method for manufacturing a welded molding according to the present embodiment.
Fig. 5 is a schematic view showing a method for manufacturing a welded molding according to the present embodiment.
Fig. 6 is a schematic view showing a state of generally known vibration welding.
Fig. 7 is a schematic view showing a test piece used in an example.
Fig. 8 is a schematic view showing test pieces used in examples.

### [Description of Embodiments]

### [Welded molding]

Hereinafter, a welded molding according to the embodiment of the present invention will be described with reference to the drawings. In all the drawings below, the dimensions and ratios of each constituent element are appropriately changed in order to make the drawings easier to be seen.

The welded molding of the present embodiment is made of liquid crystal polyester as a formation material.

### [Liquid crystal polyester]

Liquid crystal polyester used in the present embodiment is one of thermotropic liquid crystal polymers, and is a polymer capable of forming, at the temperature of 450°C or lower, a melt showing optical anisotropy.

The liquid crystal polyester of the present embodiment preferably has a repeating unit represented by General Formula (1), and more preferably has the repeating unit (1), a repeating unit represented by General Formula (2), and a repeating unit represented by General Formula (3).

Hereinafter, the repeating unit represented by General Formula (1) may be referred to as a "repeating unit (1)".

The repeating unit represented by General Formula (2) may be referred to as a "repeating unit (2)".

The repeating unit represented by General Formula (3) may be referred to as a "repeating unit (3)".

(1) -O-Ar¹-CO-

(2) -CO-Ar²-CO-

(3) -X-Ar³-Y-

(In the formula, Ar¹ represents a phenylene group, a naphthylene group, or a biphenylylene group. Ar² and Ar³ each independently represent a phenylene group, a naphthylene group, a biphenylylene group, or a group represented by General Formula (4). X and Y each independently represent an oxygen atom or an imino group (-NH-). One or more hydrogen atoms in the group represented by Ar¹, Ar², or Ar³ may be each independently substituted with a halogen atom, an alkyl group, or an aryl group.)

(4) -Ar⁴-Z-Ar⁵-

(In the formula, Ar⁴ and Ar⁵ each independently represent a phenylene group or a naphthylene group. Z represents an oxygen atom, a sulfur atom, a carbonyl group, a sulfonyl group, or an alkylidene group.)

Specific examples of the liquid crystal polyester used in the present embodiment include
(1) a polymer obtained by polymerizing a combination of aromatic hydroxycarboxylic acid, aromatic dicarboxylic acid, and aromatic diol,
(2) a polymer obtained by polymerizing a plurality of types of aromatic hydroxycarboxylic acids,
(3) a polymer obtained by polymerizing a combination of an aromatic dicarboxylic acid and an aromatic diol, and
(4) a polymer obtained by reacting a crystalline polyester such as polyethylene terephthalate with aromatic hydroxycarboxylic acid.

**In** manufacturing the liquid crystal polyester, a part or all of aromatic hydroxycarboxylic acid, aromatic dicarboxylic acid, and aromatic diol, which are used as the raw material monomer, can be previously made into an ester-forming derivative and provided to polymerization. By using such an ester-forming derivative, there is an advantage that the liquid crystal polyester can be manufactured more easily.

The following compounds are exemplary examples of the ester-forming derivative.

Examples of the ester-forming derivative of aromatic hydroxycarboxylic acid and aromatic dicarboxylic acid which have a carboxy group in a molecule include compounds in which the carboxy group is converted to a highly reactive group such as a haloformyl group (acid halide) or an acyloxycarbonyl group (acid anhydride), and compounds in which the carboxy group forms an ester with monohydric alcohols, polyhydric alcohols such as ethylene glycol, phenols, and the like so that polyester can be generated by transesterification reaction.

Examples of polymerizable derivatives of compounds having a phenolic hydroxyl group, such as aromatic hydroxycarboxylic acids and aromatic diols, include compounds in which the phenolic hydroxyl group forms an ester with lower carboxylic acids so that polyester can be generated by a transesterification reaction.

Furthermore, as long as ester-forming properties are not inhibited, the above-mentioned aromatic hydroxycarboxylic acid, aromatic dicarboxylic acid, or aromatic diol may have, in an aromatic ring in a molecule, a halogen atom such as a chlorine atom and a fluorine atom; an alkyl group having 1 to 10 carbon atoms such as a methyl group, an ethyl group, and a butyl group; and an aryl group having 6 to 20 carbon atoms such as a phenyl group, as a substituent.

Examples of the aromatic hydroxycarboxylic acid include p-hydroxybenzoic acid, m-hydroxybenzoic acid, 6-hydroxy-2-naphthoic acid, 3-hydroxy-2-naphthoic acid, 5-hydroxy-1-naphthoic acid, and 4-hydroxy-4'-carboxydiphenyl ether. Examples thereof further include an aromatic hydroxycarboxylic acid in which a part of hydrogen atoms in the aromatic ring of these aromatic hydroxycarboxylic acids is substituted with one or more substituents selected from the group consisting of an alkyl group, an aryl group, and a halogen atom.

The p-hydroxybenzoic acid is an aromatic hydroxycarboxylic acid from which (A₁) to be described later is derived.

6-Hydroxy-2-naphthoic acid is an aromatic hydroxycarboxylic acid from which (A₂) to be described later is derived.

For the aromatic hydroxycarboxylic acid, one kind may be used alone or two or more kinds may be used in combination in manufacturing liquid crystal polyester.

The repeating unit (1) described above is a repeating unit derived from a predetermined aromatic hydroxycarboxylic acid. Examples of the repeating unit derived from an aromatic hydroxycarboxylic acid include repeating units shown below. In the repeating unit derived from an aromatic hydroxycarboxylic acid, a part of the hydrogen atom in the aromatic ring may be substituted with one or more substituents selected from the group consisting of a halogen atom, an alkyl group, and an aryl group.

In the present specification, the term "derived" means that a chemical structure changes due to the polymerization of a raw material monomer, and no other structural change occurs.

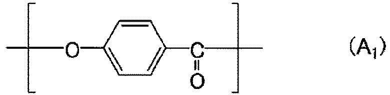

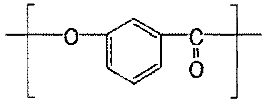

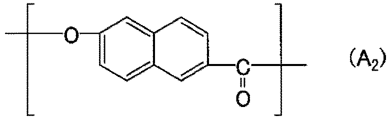

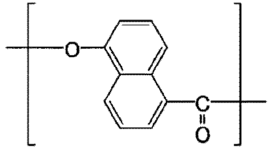

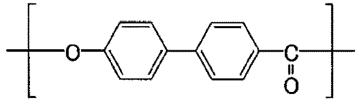

Examples of the aromatic dicarboxylic acid include terephthalic acid, isophthalic acid, biphenyl-4,4'-dicarboxylic acid, 2,6-naphthalenedicarboxylic acid, diphenyl ether-4,4'-dicarboxylic acid, and diphenylthioether-4,4'-dicarboxylic acid. Examples thereof further include an aromatic dicarboxylic acid in which a part of hydrogen atoms in the aromatic ring of these aromatic dicarboxylic acids is substituted with one or more substituents selected from the group consisting of an alkyl group, an aryl group, and a halogen atom.

The terephthalic acid is an aromatic dicarboxylic acid from which (B₁) to be described later is derived.

The isophthalic acid is an aromatic dicarboxylic acid from which (B₂) to be described later is derived.

The 2,6-naphthalenedicarboxylic acid is an aromatic dicarboxylic acid from which (B₃) to be described later is derived.

For the aromatic dicarboxylic acid, one kind may be used alone or two or more kinds may be used in combination in manufacturing liquid crystal polyester.

The repeating unit (2) described above is a repeating unit derived from a predetermined aromatic dicarboxylic acid. Examples of the repeating unit derived from an aromatic dicarboxylic acid include repeating units shown below. In the repeating unit derived from an aromatic dicarboxylic acid, a part of the hydrogen atom in the aromatic ring may be substituted with one or more substituents selected from the group consisting of a halogen atom, an alkyl group, and an aryl group.

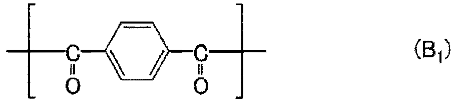

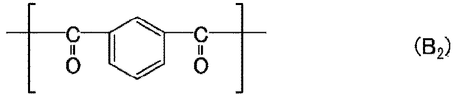

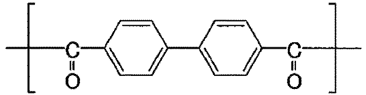

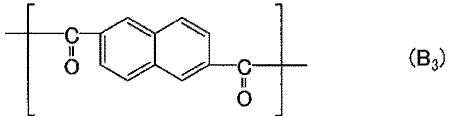

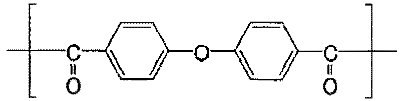

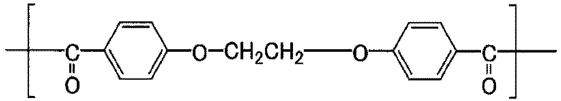

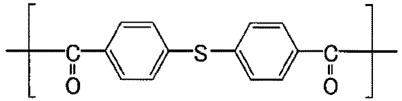

Examples of the aromatic diol include 4,4'-dihydroxybiphenyl, hydroquinone, resorcin, 4,4'-dihydroxydiphenylketone, 4,4'-dihydroxydiphenyl ether, bis(4-hydroxyphenyl)methane, 1,2-bis(4-hydroxyphenyl)ethane, 4,4'-dihydroxydiphenyl sulfone, 4,4'-dihydroxydiphenyl thioether, 2,6-dihydroxynaphthalene, and 1,5-dihydroxynaphthalene. Examples thereof further include an aromatic diol in which a part of hydrogen atoms in the aromatic ring of these aromatic diols is substituted with one or more substituents selected from the group consisting of an alkyl group, an aryl group, and a halogen atom.

The 4,4'-dihydroxybiphenyl is an aromatic diol from which (C₁) to be described later is derived.

The hydroquinone is an aromatic diol from which (C₂) to be described later is derived.

The resorcin is an aromatic diol from which (C₃) to be described later is derived.

For the aromatic diol, one kind may be used alone or two or more kinds may be used in combination in manufacturing liquid crystal polyester.

The repeating unit (3) described above include a repeating unit derived from a predetermined aromatic diol. Examples of the repeating unit derived from an aromatic diol include repeating units shown below. In the repeating unit derived from an aromatic diol, a part of the hydrogen atom in the aromatic ring may be substituted with one or more substituents selected from the group consisting of a halogen atom, an alkyl group, and an aryl group.

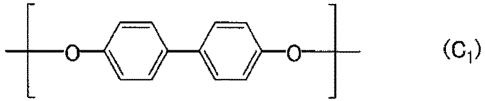

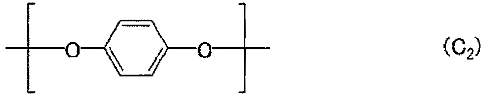

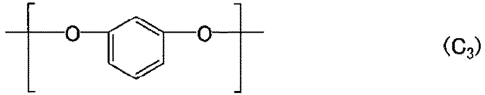

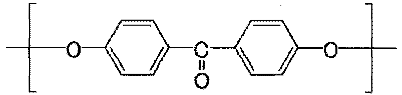

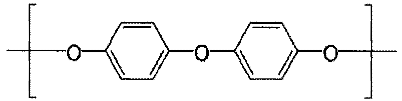

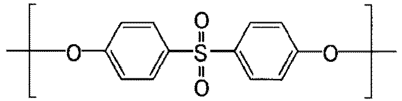

Examples of substituents that may be arbitrarily included by each of the repeating unit derived from the aromatic hydroxycarboxylic acid, the repeating unit derived from the aromatic dicarboxylic acid, and the repeating unit derived from the aromatic diol include the following substituents.

Examples of the halogen atoms include a fluorine atom, a chlorine atom, and a bromine atom.

Examples of the alkyl group include a lower alkyl group having about 1 to 4 carbon atoms, such as a methyl group, an ethyl group, and a butyl group.

Examples of the aryl group include a phenyl group.

A particularly suitable liquid crystal polyester will be described.

As the repeating unit derived from the aromatic hydroxycarboxylic acid, it is preferable to include a repeating unit ((A₁)) derived from parahydroxybenzoic acid or a repeating unit ((A₂)) derived from 2-hydroxy-6-naphthoic acid, or both thereof.

As the repeating unit derived from the aromatic dicarboxylic acid, it is preferable to include a repeating unit selected from the group consisting of a repeating unit ((B₁)) derived from terephthalic acid, a repeating unit ((B₂)) derived from isophthalic acid, and a repeating unit ((B₃)) derived from 2,6-naphthalenedicarboxylic acid.

As the repeating unit derived from the aromatic diol, it is preferable to include a repeating unit ((C₂)) derived from hydroquinone or a repeating unit derived from ((C₁)) 4,4'-dihydroxybiphenyl, or both thereof.

In addition, as a combination of these, combinations represented by the following (a) to (h) are preferable. With these combinations (a) to (h) of the repeating units, a liquid crystal polyester having favorable electrical insulation properties can be obtained.

(a): A combination consisting of (A₁), (B₁), and (C₁), or a combination consisting of (A₁), (B₁), (B₂), and (C₁).
(b): A combination consisting of (A₂), (B₃), and (C₂), or a combination consisting of (A₂), (B₁), (B₃), and (C₂).
(c): A combination consisting of (A₁) and (A₂).
(d): A combination in which a part or all of (A₁) is replaced with (A₂) in the combination (a) of the repeating units.
(e): A combination in which a part or all of (B₁) is replaced with (B₃) in the combination (a) of the repeating units.
(f): A combination in which a part or all of (C₁) is replaced with (C₃) in the combination (a) of the repeating units.
(g): A combination in which a part or all of (A₂) is replaced with (A₁) in the combination (b) of the repeating units.
(h): A combination in which (B₁) and (C₂) are added to the combination (c) of the repeating units.

Examples of particularly preferable liquid crystal polyester include a liquid crystal polyester in which a total of repeating units derived from the aromatic hydroxycarboxylic acid is 30 to 80 mol%, a total of repeating units derived from the aromatic diol is 10 to 35 mol%, and a total of repeating units derived from the aromatic dicarboxylic acid is 10 to 35 mol% with respect to a total of all repeating units.

As a method for manufacturing the liquid crystal polyester, a known method such as the method disclosed in Japanese Unexamined Patent Application, First Publication No. 2002-146003 can be applied, for example. That is, a method of performing solid phase polymerization by melt-polymerizing (polycondensing) the above-mentioned raw material monomer (aromatic hydroxycarboxylic acid, aromatic dicarboxylic acid, aromatic diol, or ester-forming derivatives thereof) to obtain an aromatic polyester with the relatively low molecular weight (hereinafter abbreviated as a "prepolymer")), and subsequently powdering this prepolymer and heating is an exemplary example. By performing the solid phase polymerization in this manner, the polymerization further proceeds, and a liquid crystal polyester with a higher molecular weight can be obtained.

In addition, a method for manufacturing a liquid crystal polyester having the above-mentioned combinations (a) and (b) of the repeating units, which are the most basic structures, is disclosed in Japanese Examined Patent Application, Second Publication No. S47-47870, Japanese Examined Patent Application, Second Publication No. S63-3888, and the like.

Melt polymerization may be performed in the presence of a catalyst. Examples of the catalyst used for melt polymerization include metallic compounds such as magnesium acetate, stannous acetate, tetrabutyl titanate, lead acetate, sodium acetate, potassium acetate, and antimony trioxide, and nitrogen-containing heterocyclic compounds such as 4-(dimethylamino)pyridine and 1-methylimidazole, where nitrogen-containing heterocyclic compounds are preferably used.

The liquid crystal polyester used for the welded molding of the present embodiment is preferably a liquid crystal polyester having the flow start temperature of 280°C or higher which is obtained by the following method. As described above, when solid phase polymerization is used in manufacturing the liquid crystal polyester, making the flow start temperature of the liquid crystal polyester 280°C or higher is possible in a relatively short time. In addition, by using the liquid crystal polyester having such a flow start temperature, the obtained molding becomes a molding having a high degree of heat resistance. Meanwhile, from the viewpoint of molding the molding in a practical temperature range, the flow start temperature of the liquid crystal polyester used in the welded molding of the present embodiment is preferably 420°C or lower and more preferably 390°C or lower.

The flow start temperature is a temperature at which the melt viscosity shows 4800 Pa·s (48000 poise) when the liquid crystal polyester is extruded from a nozzle at the temperature rising rate of 4°C/minutes under the load of 9.8 MPa (100 kg/cm²) using a capillary rheometer equipped with dies having the inner diameter of 1 mm and the length of 10 mm. The flow start temperature is an index representing the molecular weight of liquid crystal polyester well known in the technical field (refer to "Synthesis, Molding, and Application of Liquid Crystal Polymer", pp. 95 to 105, edited by Naoyuki KOIDE, published in June 5, 1987 by CMC Publishing CO., LTD.). As an apparatus for measuring the flow start temperature, it is possible to use a flow characteristic evaluation apparatus, "Flowtester CFT-500D" manufactured by Shimadzu Corporation, for example.

### [Filling material]

The welded molding of the present embodiment may contain a filling material. In the present embodiment, when the welded molding contains a filling material, sufficient strength can be imparted to the welded molding.

The filling material used in the present embodiment may be an inorganic filling material or an organic filling material. Furthermore, it may be a fibrous filling material, a plate-like filling material, or a granular filling material.

Examples of the fibrous filling material include glass fibers; carbon fibers such as pan-based carbon fibers and pitch-based carbon fibers; ceramic fibers such as silica fibers, alumina fibers, and silica-alumina fibers; and metal fibers such as stainless steel fibers. Examples thereof further include whiskers such as potassium titanate whiskers, barium titanate whiskers, wollastonite whiskers, aluminum borate whiskers, silicon nitride whiskers, and silicon carbide whiskers.

Examples of the plate-like filling material include talc, mica, graphite, wollastonite, barium sulfate, and calcium carbonate. The mica may be muscovite, may be phlogopite, may be fluorine phlogopite, or may be tetrasilicon mica.

Examples of the granular filling material include silica, alumina, titanium oxide, boron nitride, silicon carbide, and calcium carbonate.

### [Other components]

The welded molding according to the present embodiment may contain other components that do not correspond to any of the above-mentioned liquid crystal polyester and filling materials as long as the effects of the present invention are not impaired.

Examples of the other components mentioned above include additives generally used for resin moldings, such as mold release improvers such as fluororesins and metallic soaps; colorants such as dyes and pigments; antioxidants; heat stabilizers; ultraviolet absorbers; antistatic agents; and surfactants.

Examples of the other components mentioned above further include compounds having an external lubricant effect, such as higher fatty acids, higher fatty acid esters, higher fatty acid metal salts, and fluorocarbon-based surfactants.

Examples of the other components mentioned above further include thermosetting resins such as phenol resins, epoxy resins, and polyimide resins.

In the present embodiment, the liquid crystal polyester, the filling material, and the other components used as necessary are mixed at once or in an appropriate order.

In the present embodiment, it is preferable to pelletize the liquid crystal polyester, the filling material, and the other components used as necessary by melt-kneading them using an extruder.

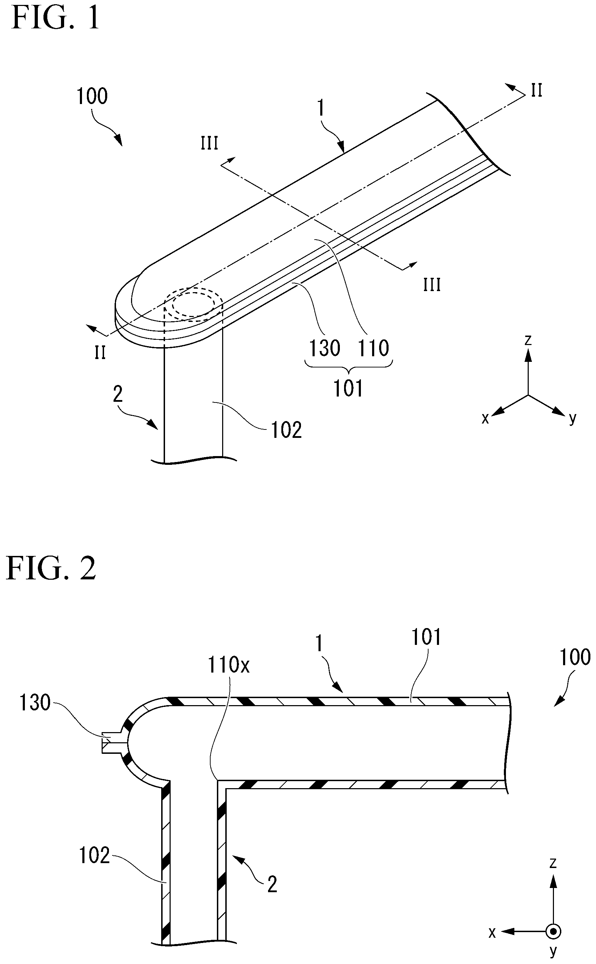

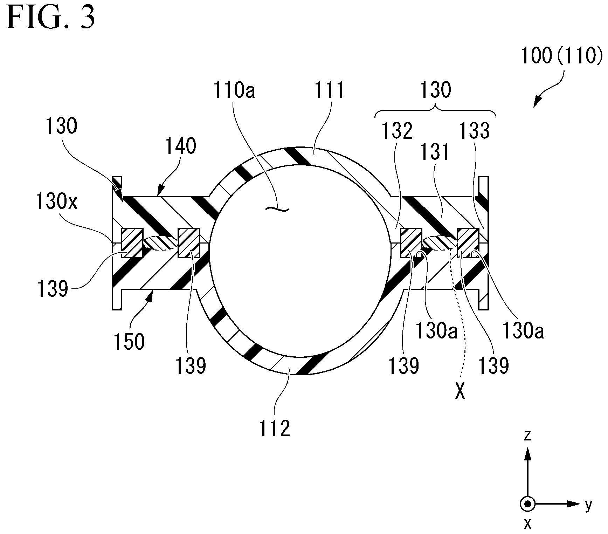

Fig. 1 is a schematic perspective view showing a welded molding according to the present embodiment. Fig. 2 is an arrow cross-sectional view taken along the line segment II-II of Fig. 1. Fig. 3 is an arrow cross-sectional view taken along the line segment III-III of Fig. 1.

As shown in Figs. 1 to 3, a welded molding 100 is a pipe. In the following description, the welded molding 100 is referred to as a pipe 100.

The pipe 100 has a first pipe 101 with one end closed, and a second pipe 102 connected to a through hole 110x provided on the wall surface of the first pipe 101. The first pipe 101 and the second pipe 102 communicate with each other through the through hole 110x.

The first pipe 101 has a tubular internal space 110a formed by combining a first member 1 and a second member 2. The internal space 110a is a space in which a liquid or gas flows depending on the usage applications of the pipe 100, for example.

In the following description, an xyz orthogonal coordinate system is set, and the positional relationship of each member will be described with reference to this xyz orthogonal coordinate system. Hereinafter an extension direction of the first pipe 101 is an x-axis direction, a direction orthogonal to the x-axis direction in the horizontal plane is a y-axis direction, and a direction orthogonal to each of the x-axis direction and the y-axis direction, that is, a vertical direction is a z-axis direction.

Hereinafter, a +z-axis direction may be referred to as a "upward direction", and a -z-axis direction may be referred to as a "downward direction". Furthermore, a portion on the +z-axis side with respect to a certain member or structure may be referred to as "upper", and a portion on the -z-axis side with respect to a certain member or structure may be referred to as "lower".

The first pipe 101 has a pipe main body 110, and a welded portion 130 provided on the outer periphery of the pipe main body 110. The welded portion 130 is a ridge portion that protrudes in a band shape along the outer surface of the first pipe 101 overlapping the xy plane.

Generally, it is difficult to integrally form the pipe 100 as shown in Figs. 1 to 3 by injection molding. Such a molding which is difficult to be integrally formed by injection molding is usually manufactured by dividing into a plurality of members to perform injection molding, and combining each of the molded members.

More specifically, as shown in Fig. 3, the pipe 100 of the present embodiment is a welded molding in which the first member 1 that is an injection molding of liquid crystal polyester and the second member 2 that is an injection molding of liquid crystal polyester. The first member 1 and the second member 2 are welded at the welded portion 130.

The first member 1 is a substantially semi-cylindrical member having a first pipe upper portion 111 constituting the upper half of the pipe main body 110, and a first welded portion 140 constituting the upper half of the welded portion 130. The first welded portion 140 is provided on both sides of the first pipe upper portion 111. The end of the first pipe upper portion 111 in a +x-axis direction is rounded such that the end of the first pipe 101 formed by being combined with the second member 2 is closed.

The second member 2 is a member having a first pipe lower portion 112 constituting the lower half of the pipe main body 110, a second welded portion 150 constituting the lower half of the welded portion 130, and a second pipe 102 connected to the first pipe lower portion 112. The second welded portion 160 is provided on both sides of the first pipe lower portion 112. The end of the first pipe lower portion 112 in the +x-axis direction is rounded such that the end of the first pipe 101 formed by being combined with the first member 1 is closed.

The welded portion 130 has a welded main body portion 131, and a pair of ribs 132 and 133 provided on both sides of the welded main body portion 131 in the visual field of Fig. 3. The ribs 132 and 133 correspond to the "pair of ribs" in the present invention. The cross section in the visual field of Fig. 3 corresponds to the "cross section intersecting the welded main body portion and the pair of ribs" in the present invention.

On the side surface of the welded portion 130, a junction line 130x, which is formed at the position at which the first welded portion 140 and the second welded portion 150 abut to each other, appears.

The welded main body portion 131 is a ridge portion formed at the inner side of the welded portion 130 in a band shape along the outer surface of the first pipe 101. The welded main body portion 131 is a part in which the first member 1 and the second member 2 are heat-welded by a method to be described later.

In a part of the welded main body portion 131 indicated by a reference sign X, liquid crystal polyester constituting the first member 1 and liquid crystal polyester constituting the second member 2 are melted and mixed with each other.

The pair of ribs 132 and 133 are ridge portions formed at the inner side of the welded portion 130 in a band shape along both sides of the welded main body portion 131. In the drawing, the rib on the pipe main body 110 side with respect to the welded main body portion 131 is the rib 132, and the rib on the opposite side to the pipe main body 110 with respect to the welded main body portion 131 is the rib 133.

Between the welded main body portion 131 and the rib 132 and between the welded main body portion 131 and the rib 133, a tubular holding space 130a is formed along both sides of the welded main body portion 131. The inner side of the holding space 130a is filled with a burr 139.

The burr 139 is a solidified part of molten resin generated in the manufacturing method described later, and a formation material thereof is a resin obtained when the formation material of the first member 1 and the formation material of the second member 2 are melted and mixed with each other.

In the pipe 100 of the present embodiment, the filling rate of the burr 139 in the holding space 130a is 20% or more and less than 100%. The filling rate is preferably 25% or more, more preferably 30% or more, and further preferably 50% or more. That is, the filling rate of the burr 139 in the holding space 130a is preferably 25% or more and less than 100%, more preferably 30% or more and less than 100%, further preferably 50% or more and less than 100%, and still further preferably 65% or more and less than 100%.

The filling rate of the burr in the holding space can be measured by image analysis using a cross-sectional image. Specifically, image processing software (WinROOF2018, MITANI CORPORATION) is used.

First, the pipe is cut in the plane orthogonal to the extension direction of the holding space to obtain a cross section. At the time of observation, the cross section may be smoothed by filling the cross section and exposed voids with a curable resin having light-transmitting properties, such as an epoxy resin, to cure and harden them, and further polishing the cross section.

In the image analysis, the cross section is imaged, the holding space in which burrs are present is designated in an image of the obtained cross section, a region occupied by the burrs and a region occupied by voids in the holding space of the burrs are binarized and distinguished by a binarization command that is the function of the image processing software. A threshold value of binarization is a value at which the boundary between the burr and the void which can be determined from the cross-sectional image, and the boundary between the burr and the void in the image after binarization coincide with each other. An operator adjusts the image processing software to set the threshold value of the above-mentioned condition when executing the "binarization command". However, the operator visually distinguishes the boundary between the burr and the welded main body portion forming the holding space. Similarly, the operator visually distinguishes each of the boundary between the burr and the rib forming the holding space, the boundary between the void and the welded main body portion, and the boundary between the void and the rib.

The filling rate of the burr is calculated by dividing the area of the region occupied by the burrs in the holding space in the cross-sectional image by the total area of the holding space. The total area of the holding space is the sum of the area of the region occupied by the burrs and the area of the region occupied by the voids.

When a target for which the filling rate of burrs is obtained is a pipe with many bends, the filling rate of burrs is calculated for the cross sections of a plurality of locations of the pipe by the above-mentioned method, and the arithmetic mean value of each of the obtained filling rates is adopted as a filling rate of burrs to be obtained. In this case, the filling rate of burrs is calculated for the cross sections of three or more locations. Furthermore, the filling rate of burrs may be calculated for the cross sections of ten or less locations in consideration of work efficiency.

In the present embodiment, as the "filling rate of burrs in the holding space", a value, which is obtained as a proportion (%) of the total area of the burrs 139 filled in the two holding spaces 130a with respect to the total area of the two holding spaces 130a exposed in the cross section of the welded portion 130, is adopted. When obtaining the filling rate of burrs in the holding space, the cross section of the welded portion 130 including a target holding space is preferably a cross section in a virtual plane orthogonal to an extension direction of the holding space.

The filling rate of burrs can be adjusted by controlling the manufacturing conditions (heating conditions, pressing conditions, vibration conditions) in the manufacturing method to be described later.

When the above-mentioned filling rate is 20% or more, the burr 139 covers the side surface of the welded main body portion 131, and the welded main body portion 131 can be effectively reinforced. Therefore, the welded molding 100 having the filling rate of 20% or more becomes a highly reliable molding in which the welding strength of the welded portion 130 is excellent.

Furthermore, when the filling rate is 25% or more, for example, a gas or liquid flowing in the internal space 110a of the pipe 100 is unlikely to enter the holding space 130a. Therefore, the problem of swelling of the welded main body portion 131 due to a gas or liquid flowing in the internal space 110a and lowering of welding strength is less likely to occur.

Meanwhile, when the above-mentioned filling rate is less than 100%, the burr 139 does not leak out from the holding space 130a and stays in the holding space 130a. Therefore, when the above-mentioned filling rate is less than 100%, defects in the appearance of the welded portion 130 caused by the burr 139 do not occur.

Furthermore, when the filling rate is less than 100%, the burr 139 does not leak into the internal space 110a of the pipe 100 and stays in the holding space 130a. Therefore, when the above-mentioned filling rate is less than 100%, the burr 139 is unlikely to be mixed with a gas or liquid flowing inside the pipe 100.

In the present embodiment, the welding strength of the welded portion 130 in which the first member 1 and the second member 2 are heat-welded is the tensile strength of the welded portion 130. The welding strength of the welded portion 130 in which the first member 1 and the second member 2 are heat-welded is preferably 13 MPa or more, more preferably 15 MPa or more, and further preferably 20 MPa or more. When the welding strength of the welded portion 130 is 13 MPa or more, a highly reliable molding that is less likely to be damaged is obtained. Furthermore, usually, the welding strength of the welded portion 130 which was heat-welded is 100 MPa or less. That is, the welding strength of the welded portion 130 in which the first member 1 and the second member 2 are heat-welded is preferably 13 MPa or more and 100 MPa or less, more preferably 15 MPa or more and 100 MPa or less, and further preferably 20 MPa or more and 100 MPa or less.

By producing a test piece obtained by cutting out the welded portion 130 with the thickness of 10 mm in an extension direction of the welded portion 130 and performing a tensile test in which the obtained test piece is pulled in a direction orthogonal to the welded surface, the welding strength of the welded portion 130 can be measured as the maximum stress until the test piece fractures at the welded surface of the test piece.

Furthermore, when a welded molding shows a pipe shape as in the present embodiment and has welded portions at both sides in an extension direction along an extension direction of the pipe, a test piece may be produced by cutting the welded molding into a round slice of the thickness of 10 mm to perform the above-mentioned tensile test on the obtained test piece. In this case, the test piece has two welded portions, and the maximum stress until the test piece fractures at the welded surface in one welded portion is measured. Therefore, the technical meaning of the measured value is different from the case in which the tensile test is performed on only one welded portion. Even in this case, the welding strength of the welded portion can be evaluated by comparing the measured values of the test pieces having the same shape.

The tensile test is performed using a universal tester (TENSILON RTG-1250, manufactured by A&D Company, Limited). The measurement conditions of the tensile test are a distance between spans of 20 mm and a test rate of 5 mm/minutes. The number of performing the tensile test is preferably 3 or more times and 10 or less times, for example. The tensile test is performed on a plurality of test pieces, and the arithmetic mean value of the obtained multiple welding strengths is used as the welding strength.

### [Method for manufacturing of welded molding]

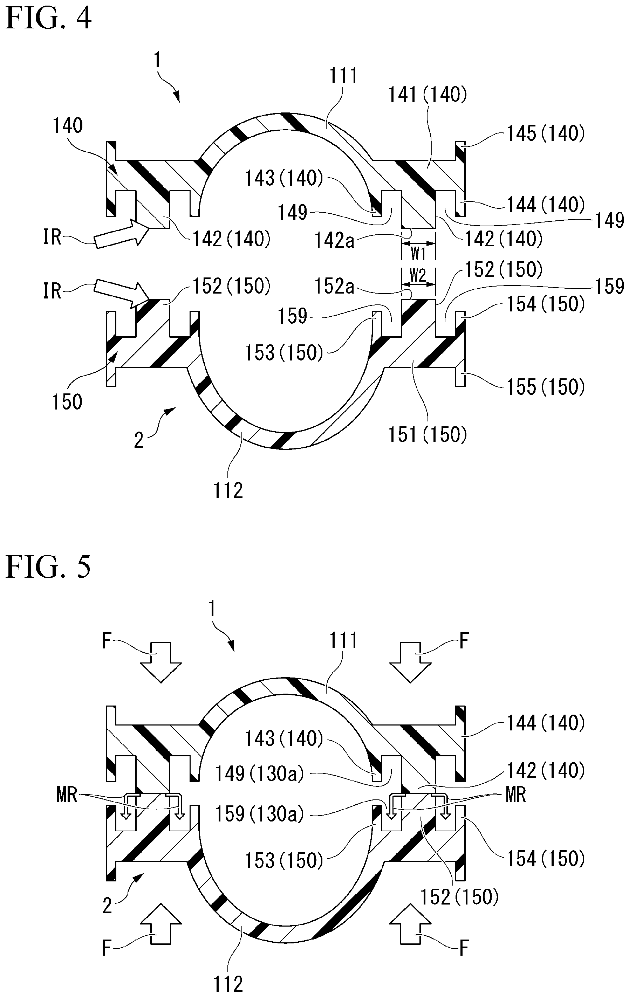

Figs. 4 and 5 are schematic views showing a method for manufacturing a welded molding according to the present embodiment. As described above, a welded molding 100 of the present embodiment is made of liquid crystal polyester as a formation material.

As shown in Fig. 4, in the method for manufacturing a welded molding of the present embodiment, a first member 1 and a second member 2 are used. Each of the first member 1 and the second member 2 is an injection molding made of liquid crystal polyester as a formation material.

The first member 1 has a first pipe upper portion 111 and a first welded portion 140. The first welded portion 140 has a first base portion 141, a first ridge portion 142, and a pair of first ribs 143 and 144, and a rib 145.

The first base portion 141 protrudes from the side surface of the first pipe upper portion 111 in an xy plane direction.

The first ridge portion 142 protrudes downward (in a -z-axis direction) from the first base portion 141. The first ridge portion 142 has a substantially rectangular structure provided so that a top surface 142a can be orthogonal to a protruding direction of the first ridge portion 142 in a cross-sectional view.

The first ribs 143 and 144 are provided on both sides of the first ridge portion 142 along an extension direction of the first ridge portion 142, and protrude to the same side as the first ridge portion 142 with respect to the first base portion 141. In the drawing, the rib on the first pipe upper portion 111 side with respect to the first ridge portion 142 is indicated by the reference numeral 143, and the rib on the opposite side to the first pipe upper portion 111 with respect to the first ridge portion 142 is indicated by the reference numeral 144.

Each of recessed portions 149 is formed between the first ridge portion 142 and the first rib 143, and between the first ridge portion 142 and the first rib 144.

The first ribs 143 and 144 shown in the drawing protrude in the -z-axis direction and in parallel to the first ridge portion 142, but the first ribs 143 and 144 are not limited thereto and may be inclined toward the first ridge portion 142.

Furthermore, the first welded portion 140 has the rib 145 that protrudes to the opposite side to the first pipe upper portion 111 with respect to the first ridge portion 142 and protrudes to the opposite side to the first ridge portion 142 with respect to the first base portion 141.

The second member 2 has a first pipe lower portion 112 and a second welded portion 150. The second welded portion 150 has a second base portion 151, a second ridge portion 152, and a pair of second ribs 153 and 154, and a rib 155.

The second base portion 151 protrudes from the side surface of the first pipe lower portion 112 in the xy plane direction.

The second ridge portion 152 protrudes upward (in a +z-axis direction) from the second base portion 151. The second ridge portion 152 has a substantially rectangular structure provided so that a top surface 152a can be orthogonal to a protruding direction of the second ridge portion 152 in a cross-sectional view.

The second ribs 153 and 154 are provided on both sides of the second ridge portion 152 along an extension direction of the second ridge portion 152, and protrude to the same side as the second ridge portion 152 with respect to the second base portion 151. In the drawing, the rib on the first pipe lower portion 112 side with respect to the second ridge portion 152 is indicated by the reference numeral 153, and the rib on the opposite side to the first pipe lower portion 112 with respect to the second ridge portion 152 is indicated by the reference numeral 154.

Each of recessed portions 159 is formed between the second ridge portion 152 and the second rib 153, and between the second ridge portion 152 and the second rib 154.

The second ribs 153 and 154 shown in the drawing protrude in the +z-axis direction and in parallel to the second ridge portion 152, but the second ribs 153 and 154 are not limited thereto and may be inclined toward the second ridge portion 152.

Furthermore, the second welded portion 150 has the rib 155 that protrudes to the opposite side to the first pipe lower portion 112 with respect to the second ridge portion 152 and protrudes to the opposite side to the second ridge portion 152 with respect to the second base portion 151.

In the method for manufacturing a welded molding of the present embodiment, first, the first ridge portion 142 of the first member 1 and the second ridge portion 152 of the second member 2 are heated to a temperature equal to or higher than the flow start temperature of liquid crystal polyester that is a formation material of each of the members. For example, each of the first ridge portion 142 and the second ridge portion 152 is irradiated with infrared light IR to heat the first ridge portion 142 and the second ridge portion 152.

As a method of heating the first ridge portion 142 and the second ridge portion 152, a generally known method can be adopted as long as it is a method of heating to a temperature equal to or higher than the flow start temperature of liquid crystal polyester. For example, in addition to irradiation with infrared light, a heat source may be brought into contact with the first ridge portion 142 and the second ridge portion 152 to directly heat the first ridge portion 142 and the second ridge portion 152.

Next, as shown in Fig. 5, the first ridge portion 142 and the second ridge portion 152 are abutted to each other to perform vibration welding while pressing by applying a force F in a direction in which the first ridge portion 142 and the second ridge portion 152 are brought relatively close to each other.

At the time of the vibration welding, the first ridge portion 142 and the second ridge portion 152 are previously heated to a temperature equal to or higher than the flow start temperature of liquid crystal polyester that is a formation material of each of the members. Therefore, when the vibration welding is performed on the first ridge portion 142 and the second ridge portion 152, liquid crystal polyester is easily melted, and welding is performed while mixing liquid crystal polyester of the first member 1 and liquid crystal polyester of the second member 2 with each other.

Therefore, according to the method for manufacturing a welded molding of the present embodiment, it is possible to easily perform vibration welding on a molding of liquid crystal polyester which is known to be not suitable for welding due to the high solidification rate and the generation of interface flow according to the general knowledge.

As the vibration welding proceeds, the first member 1 and the second member 2 are brought close to each other while the first ridge portion 142 and the second ridge portion 152 are melted. At this time, in the vibration welding, it is preferable that the first member 1 and the second member 2 are brought close to each other until the first rib 143 and the second rib 153 abut to each other and the first rib 144 and the second rib 154 abut to each other.

When the first rib 143 and the second rib 153 abut to each other, the recessed portion 149 and the recessed portion 159 are connected, and the above-mentioned holding space 130a, which is surrounded by the first rib 143, the second rib 153, the first ridge portion 142, and the second ridge portion 152, is formed. Furthermore, when the first rib 144 and the second rib 154 abut to each other, the recessed portion 149 and the recessed portion 159 are connected, and the above-mentioned holding space 130a, which is surrounded by the first rib 144, the second rib 154, the first ridge portion 142, and the second ridge portion 152, is formed.

At the time of the vibration welding, molten resin MR is discharged from the welded part between the first ridge portion 142 and the second ridge portion 152. The discharged molten resin flows into the above-mentioned holding space and is held. The molten resin MR solidifies to become the above-mentioned burr 139.

The above-mentioned step of vibration welding is preferably completed before the molten resin MR leaks out from the space (holding space 130a) surrounded by the first ridge portion 142 and the second ridge portion 152, and the first rib 143 and the second rib 153, or the space (holding space 130a) surrounded by the first ridge portion 142 and the second ridge portion 152, and the first rib 144 and the second rib 154.

In performing the above-mentioned vibration welding, a width W1 of the top surface 142a of the first ridge portion 142 shown in Fig. 4 is preferably 90% or more and 110% or less of a width W2 of the top surface 152a of the second ridge portion 152. When the sizes of the first ridge portion 142 and the second ridge portion 152 are in the above-mentioned relationship, the welding strength tends to become high, which is preferable. In the first member 1 and the second member 2 shown in the drawing, the width W1 of the top surface 142a of the first ridge portion 142 and the width W2 of the top surface 152a of the second ridge portion 152 are the same (100%).

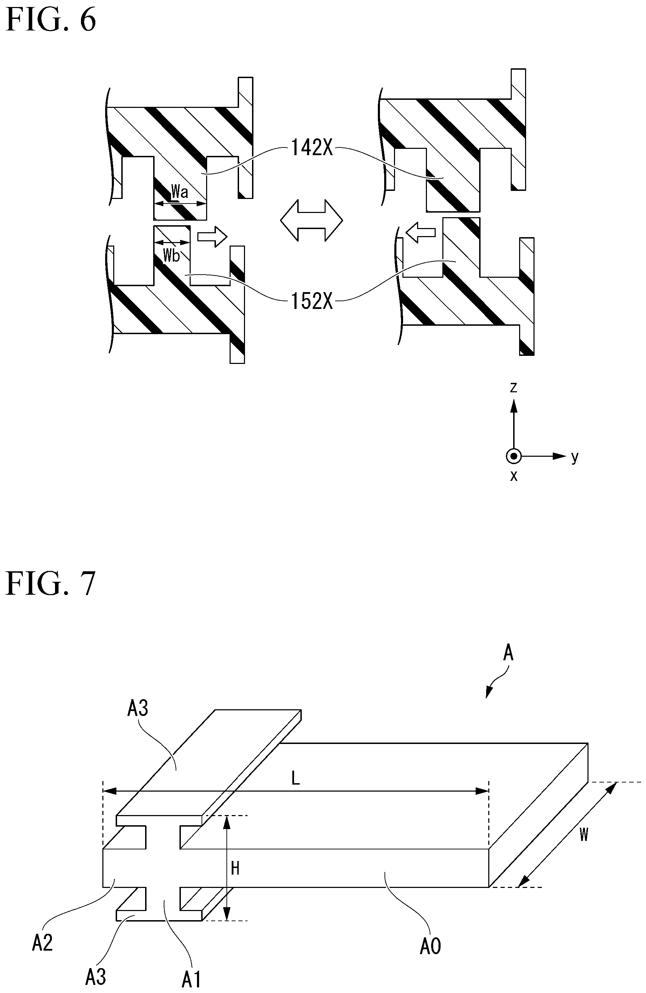

Fig. 6 is a schematic view showing a state of generally known vibration welding.

Based on the knowledge of general vibration welding, a width Wa of a top surface of one ridge portion 142X is set to about 70% of a width Wb of a top surface of the other ridge portion 152X, for example. As shown in Fig. 6, this is based on the idea of vibration in a state where the top surface of the ridge portion 142X and the top surface of the ridge portion 152X are always in contact with each other when the ridge portion 142X and the ridge portion 152X are relatively vibrated in a width direction of the ridge portion 142X.

By causing the sizes of the top surface of the ridge portion 142X and the top surface of the ridge portion 152X to be in such a relationship, the top surface of the ridge portion 152X is always in contact with the top surface of the ridge portion 142X, and air cooling of the ridge portion 152X is inhibited. Therefore, it is thought to be advantageous for the vibration welding.

On the other hand, in the method for manufacturing a welded molding of the present embodiment, it was found that a high welding strength can be obtained by setting the width W1 of the top surface 142a of the first ridge portion 142 to 90% or more and 110% or less of the width W2 of the top surface 152a of the second ridge portion 152, which is the size generally thought to be disadvantageous when considering from the generally known knowledge.

In Fig. 4, the top surface 142a of the first ridge portion 142 is orthogonal to a protruding direction of the first ridge portion 142 in a cross-sectional view, but there is no limitation.

It is preferable that the top surface 142a of the first ridge portion 142 be inclined toward the recessed portion 149 side. In the case of such a shape, excess molten resin MR generated at the time of welding can be efficiently discharged into the holding space 130a. Furthermore, in the case of such a shape, molten resin MR generated in the first ridge portion 142 is easily pressed toward molten resin MR generated in the second ridge portion 152, the molten resins are easily mixed with each other, and therefore welding strength is easily improved.

Furthermore, the shape of the top surface 142a may be inclined toward the recessed portions 149 on both sides with the central portion of the top surface 142a as a boundary, that is, the top surface 142a may be in a ridge shape toward the second ridge portion 152.

For the same reason as that of the preferable shape of the first ridge portion 142 described above, it is preferable that the top surface 152a of the second ridge portion 152 be inclined toward the recessed portion 159 side. When the top surface 142a of the first ridge portion 142 and the top surface 152a of the second ridge portion 152 are both inclined, it is preferable that inclination directions be different from each other. It is preferable to perform welding after causing the first ridge portion 142 and the second ridge portion 152 to face each other so that the top surface 142a and the top surface 152a can be substantially parallel to each other.

According to the method for manufacturing the welded molding having the configuration as above, it is possible to provide a method for manufacturing a welded molding which can suitably manufacture a welded molding.

Furthermore, according to the pipe having the configuration as above, a highly reliable pipe in which the strength of welded parts is secured is obtained.

The welded molding 100 of the present embodiment has been described with the pipe as an example, but is not limited thereto. According to a welded molding which has welded portions having the same configuration as that of the welded portion 130 of the pipe 100 and in which the filling rate of burrs in a holding space of the welded portion is 20% or more and less than 100%, a welded molding in which the strength of welded parts is secured is obtained.

Although suitable embodiments according to the present invention have been described above with reference to the accompanying drawings, it is needless to say that the present invention is not limited to such examples. The various shapes, combinations, and the like of the constituent members described in the above-mentioned examples are examples, and can be variously changed based on design requirements and the like within the range not deviating from the scope of the present invention as defined in the appended claims.

### [Examples]

Hereinafter, the present invention will be described with reference to examples, but the present invention is not limited to these examples.

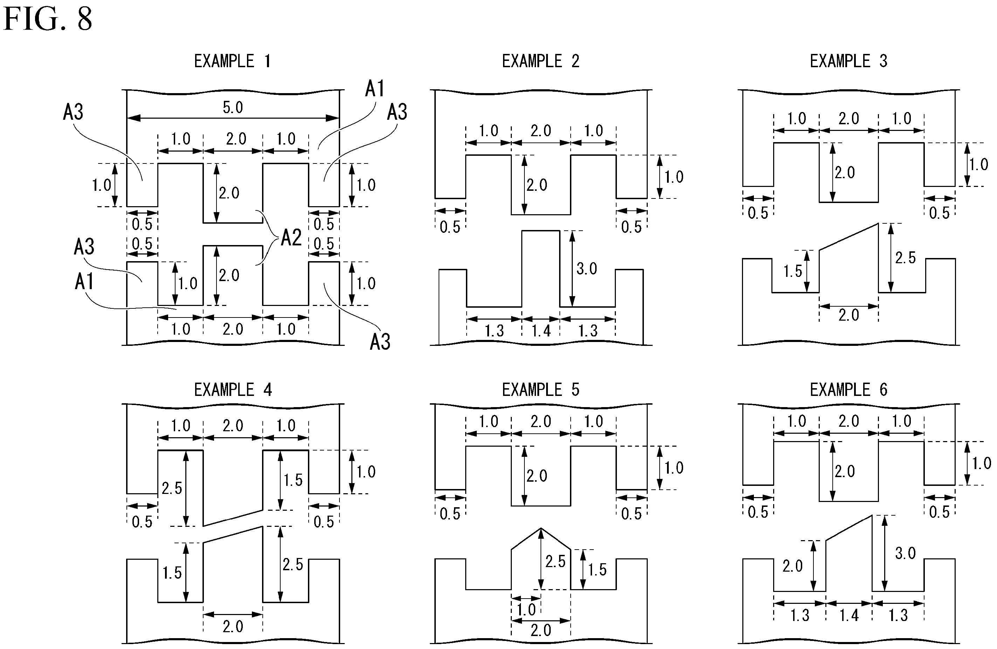

Figs. 7 and 8 are schematic views showing test pieces used in examples. In the examples, a test piece A as shown in Fig. 7 was injection-molded using liquid crystal polyester as a formation material.

The test piece A has a flat plate-shaped main body A0, a base portion A1 provided at one end side of the main body A0 so as to intersect with the main body A0, a ridge portion A2 provided to protrude from the base portion A1 to the opposite side of the main body A0, and a pair of ribs A3 provided on both sides of the ridge portion A2 along an extension direction of the ridge portion A2 and protruding to the same side as the ridge portion A2 with respect to the base portion A1.

The test piece A is a model of the first welded portion 140 of the first member 1 and the second welded portion 150 of the second member 2 which are described in the manufacturing method of the above-described embodiment.

The material and molding conditions of the test piece A are as follows.

### (Manufacturing of liquid crystal polyester)

994.5 g (7.2 mol) of parahydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride were put in a reactor equipped with a stirrer, a torque meter, a nitrogen gas inlet tube, a thermometer, and a reflux condenser.

After substituting the inside of the reactor with nitrogen gas, 0.18 g of 1-methylimidazole was added under a nitrogen gas stream, the temperature was raised to 150°C for 30 minutes, and refluxing was performed for 30 minutes while maintaining this temperature.

Next, after adding 2.4 g of 1-methylimidazole, the temperature of the mixture in the reactor was raised to 320°C for 2 hours and 50 minutes while evaporating by-product acetic acid and unreacted acetic anhydride, the reaction was completed at the time point when an increase in torque was recognized, and the contents were taken out.

The obtained solid content was cooled to room temperature and pulverized with a coarse pulverizer. Thereafter, in a nitrogen atmosphere, the temperature of the pulverized solid content was raised from room temperature to 250°C for 1 hour and further raised from 250°C to 295°C for 5 hours, and thereafter, solid phase polymerization was caused to proceed by maintaining 295°C for 3 hours. Next, the reaction product was cooled to obtain a liquid crystal polyester.

### (Manufacturing of liquid crystal polyester resin composition)

70 parts by mass of a powder of the liquid crystal polyester and 30 parts by mass of chopped glass fibers (model number: CS03JAPX-1, manufactured by Owens Corning Corporation) were mixed, and the obtained mixture was melt-kneaded using a two-axis extruder (model number: PCM-30, manufactured by Ikegai Corporation) to manufacture pellets of a liquid crystal polyester resin composition.

As the melt-kneading conditions, the cylinder set temperature of the two-axis extruder was 340°C, and the screw rotation speed was 150 rpm. The "cylinder set temperature" means the arithmetic mean value of the set temperature of a heating device (cylinder heater) provided from the downstream side of the cylinder to the portion of about 2/3 of the cylinder length.

### (Molding of test piece)

The obtained pellets were molded at 340°C using an injection molding machine (model number: PS40E5ASE, manufactured by NISSEI PLASTIC INDUSTRIAL CO., LTD.) to mold a plurality of test pieces A having different shapes of ridge portions A2. The dimensions of the test piece A shown in Fig. 7 were L100 m × W55 mm × H5 mm.

Under the above-mentioned molding conditions, a plurality of test pieces A in which the shape of the ridge portion A2 was changed were produced. The plurality of test pieces A have a common configuration other than the shape of the ridge portion A2. Therefore, the length of the entire test piece A (the size of a reference sign L in Fig. 7) differs depending on the shape of the ridge portion A2.

For the produced test pieces, sets of test pieces having ridge portions A2 as shown in Fig. 8 were set. Each numerical value in Fig. 8 indicates the dimensions of the ridge portions A2 and ribs A3. The unit of dimension is mm.

### (Examples 1 to 6)

As shown in Fig. 8, each set of test pieces shown in Fig. 8 was designated as Examples 1 to 6. Immediately after the test pieces of each set were heated by irradiating the ridge portions A2 with infrared light IR under the following conditions, the ridge portions A2 were vibration-welded under the following conditions to manufacture a welded molding.

### (Infrared light heating conditions)

Heating wire output: 7.5 A
Distance between test piece and heating wire: 2.0 mm
Heating time: 40 seconds

### (Vibration welding conditions)

Amplitude: 1.0 mm
Vibration frequency: 220 Hz
Vibration time: 1.0 second
Pressing load: 3 MPa

### (Comparative Example 1)

A welded molding of Comparative Example 1 was manufactured in the same manner as in Example 2 except that the test pieces were abutted to each other and were not vibrated.

### (Comparative Example 2)

A welded molding of Comparative Example 2 was manufactured in the same manner as in Example 1 except that the test pieces were vibration-welded without heating the test pieces with infrared light. However, the ridge portions were not welded to each other, and a welded molding could not be obtained.

### (Comparative Example 3)

A welded molding of Comparative Example 3 was manufactured in the same manner as in Example 2 except that the test pieces were vibration-welded without heating the test pieces with infrared light. However, the ridge portions were not welded to each other, and a welded molding could not be obtained.

### (Comparative Example 4)

A welded molding of Comparative Example 4 was manufactured in the same manner as in Comparative Example 1 except that the heating time by irradiation with infrared light was changed to 7 seconds.

### (Filling rate of burrs)

A method of calculating the filling rate of burrs was performed by the method described below.

First, the produced welded molding was cut on a plane (cross section) orthogonal to an extension direction of a tubular holding space filled with burrs. An image of the cut cross section was taken, and the obtained image of the cross section was image-analyzed using image processing software (WinROOF2018, MITANI CORPORATION).

**In** the image analysis, the cross section was imaged, the holding space in which burrs were present was designated in an image of the obtained cross section, a region occupied by the burrs and a region occupied by voids in the holding space of the burrs were binarized and distinguished by a binarization command that is the function of the image processing software. A threshold value of binarization was a value at which the boundary between the burr and the void which can be determined from the cross-sectional image, and the boundary between the burr and the void in the image after binarization coincided with each other. An operator adjusted the image processing software to set the threshold value of the above-mentioned condition when executing the "binarization command". The operator visually distinguished each of the boundary between the burr and the welded main body portion forming the holding space, the boundary between the burr and the rib forming the holding space, the boundary between the void and the welded main body portion, and the boundary between the void and the rib.

The filling rate of the burr was calculated by dividing the area of the region occupied by the burrs in the holding space in the cross-sectional image by the total area of the holding space. The total area of the holding space is the sum of the area of the region occupied by the burrs and the area of the region occupied by the voids.

The filling rate of burrs was calculated using the total area of the holding spaces on both sides of the welded ridge portion and the total area of the region occupied by the burrs in the holding spaces on both sides of the ridge portion.

### (Welding strength)

The welding strength of the welded molding of the test piece was obtained by measuring the tensile strength in a tensile test. The tensile strength obtained by measuring by the following method was defined as the welding strength of the welded molding of the test piece.

Specifically, with respect to the welded moldings of the test pieces obtained in Examples 1 to 6 and Comparative Examples 1 to 4, each of the other end side of a main body A0 (the opposite side to the ridge portion A2) was gripped, and a tensile test was performed to confirm the welding strength. The measurement of the welding strength was performed three times by preparing three welded moldings. The arithmetic mean value of the obtained welding strength was used as the value of the obtained welding strength.

The tensile test was performed using a universal tester (TENSILON RTG-1250, manufactured by A&D Company, Limited) under the measurement conditions of the distance between spans of 20 mm and the test rate of 5 mm/minutes. The maximum stress in the tensile test was adopted as the measured value of the welding strength.

The evaluation results are shown in Table 1.

**[Table 1]**

| | Welding method | Welding strength (MPa) | Filling rate of burrs (%) |
|---|---|---|---|
| Example 1 | IR + vibration | 18 | 73 |
| Example 2 | IR + vibration | 11 | 61 |
| Example 3 | IR + vibration | 16 | - |
| Example 4 | IR + vibration | 22 | - |
| Example 5 | IR + vibration | 16 | - |
| Example 6 | IR + vibration | 14 | - |
| Comparative Example 1 | IR | 8 | - |
| Comparative Example 2 | Vibration | No welding | - |
| Comparative Example 3 | Vibration | No welding | - |
| Comparative Example 4 | IR | 7 | 17 |

As a result of the evaluation, all of Examples 1 to 6 showed higher welding strength as compared with the cases of irradiation with infrared light only (Comparative Examples 1 and 4) and vibration welding only (Comparative Examples 2 and 3). Furthermore, the filling rates of burrs in the holding spaces of Examples 1 and 2 showed high values of 73% and 61%. The filling rate of burrs in the holding space of Comparative Example 4 was 17%.

Although the filling rate of burrs in the holding space of Examples 3 to 6 was not actually measured, it was strongly suggested the filling rate was a filling rate of 20% or more, which was by visual observation than the filling rate of burrs of Comparative Example 4.

From the above results, it was found that the present invention is useful.

### [Reference Signs List]

1: First member
2: Second member
100: Welded molding (pipe)
130: Welded portion
130a: Holding space
131: Welded main body portion
132, 133: Rib
139: Burr
141: First base portion
142: First ridge portion
142a, 152a: Top surface
143, 144: First rib
151: Second base portion
152: Second ridge portion
153, 154: Second rib
W1: Width of top surface of first ridge portion
W2: Width of top surface of second ridge portion

## Claims

1. A method for manufacturing a welded molding made of liquid crystal polyester as a formation material, the method comprising:
a step of heating each of a first ridge portion (142) of a first member (1) made of the liquid crystal polyester as a formation material and a second ridge portion (152) of a second member (2) made of the liquid crystal polyester as a formation material to a temperature equal to or higher than a flow start temperature of the liquid crystal polyester; and
a step of abutting the first ridge portion and the second ridge portion to each other to perform vibration welding while pressing the first ridge portion and the second ridge portion in a direction in which the first ridge portion and the second ridge portion are brought relatively close to each other.

2. The method for manufacturing a welded molding according to Claim 1,
wherein the first member includes
a first base portion (141),
the first ridge portion protruding from the first base portion, and
a pair of first ribs (143, 144) provided on both sides of the first ridge portion along an extension direction of the first ridge portion and protruding toward the same side as the first ridge portion with respect to the first base portion,
the second member includes
a second base portion (151),
the second ridge portion protruding from the second base portion, and
a pair of second ribs (153, 154) provided on both sides of the second ridge portion along an extension direction of the second ridge portion and protruding toward the same side as the second ridge portion with respect to the second base portion, and
in the step of performing vibration welding, the first member and the second member are brought close to each other until the first rib and the second rib abut to each other.

3. The method for manufacturing a welded molding according to Claim 2, wherein the step of performing vibration welding is completed before molten resin leaks out from a space surrounded by the first ridge portion, the second ridge portion, the first rib, and the second rib.

4. The method for manufacturing a welded molding according to any one of Claims 1 to 3, wherein a width of a top surface of the first ridge portion is 90% or more and 110% or less of a width of a top surface of the second ridge portion.

5. A welded molding comprising:
a first member (1); and
a second member (2),
wherein each of the first member and the second member is made of liquid crystal polyester as a formation material,
the welded molding includes a welded portion (130) formed by heat-welding the first member and the second member,
the welded molding being **characterized in that**:
the welded portion has a welded main body portion (131) in which the first member and the second member are heat-welded, and a pair of ribs (132, 133) provided on both sides of the welded main body portion,
a tubular holding space (130a) is formed between the welded main body portion and the ribs,
the holding space is filled with burrs (139) formed of the liquid crystal polyester, and
a filling rate of the burrs in the holding space is 20% or more and less than 100% in a cross section intersecting the welded main body portion and the pair of ribs.

6. The welded molding of claim 5, wherein
a tensile strength of a welded portion in which the first member and the second member are heat-welded is 13 MPa or more.

7. A pipe (100) which is the welded molding according to Claim 5 or 6.

## Patentansprüche

1. Verfahren zur Herstellung eines geschweißten Formteils aus einem Flüssigkristallpolyester als Formmaterial, wobei das Verfahren aufweist:
einen Schritt des Erwärmens jeweils eines ersten Leistenabschnitts (142) eines ersten Elements (1) aus dem Flüssigkristallpolyester als Formmaterial und eines zweiten Leistenabschnitts (152) eines zweiten Elements (2) aus dem Flüssigkristallpolyester als Formmaterial auf eine Temperatur, die gleich oder höher als eine Fließbeginn-Temperatur des Flüssigkristallpolyesters ist; und
einen Schritt des Aneinanderfügens des ersten Leistenabschnitts und des zweiten Leistenabschnitts, um eine Vibrationsverschweißung durchzuführen, während der erste Leistenabschnitt und der zweite Leistenabschnitt in einer Richtung gedrückt werden, in der der erste Leistenabschnitt und der zweite Leistenabschnitt relativ nahe aneinander gebracht werden.

2. Verfahren zur Herstellung eines geschweißten Formteils nach Anspruch 1,
wobei das erste Element aufweist:
einen ersten Basisabschnitt (141),
den ersten Leistenabschnitt, der von dem ersten Basisabschnitt vorsteht, und
ein Paar erster Rippen (143, 144), die an beiden Seiten des ersten Leistenabschnitts entlang einer Erstreckungsrichtung des ersten Leistenabschnitts vorgesehen sind und in Bezug auf den ersten Basisabschnitt zur gleichen Seite wie der erste Leistenabschnitt vorstehen,
das zweite Element aufweist:
einen zweiten Basisabschnitt (151),
den zweiten Leistenabschnitt, der von dem zweiten Basisabschnitt vorsteht, und
ein Paar zweiter Rippen (153, 154), die auf beiden Seiten des zweiten Leistenabschnitts entlang einer Erstreckungsrichtung des zweiten Leistenabschnitts vorgesehen sind und in Bezug auf den zweiten Basisabschnitt zur gleichen Seite wie der zweite Leistenabschnitt vorstehen, und
in dem Schritt des Durchführens des Vibrationsschweißens das erste Element und das zweite Element einander angenähert werden, bis die erste Rippe und die zweite Rippe aneinander anliegen.

3. Verfahren zur Herstellung eines geschweißten Formteils nach Anspruch 2, wobei der Schritt des Durchführens des Vibrationsschweißens abgeschlossen ist, bevor geschmolzenes Harz aus einem Raum austritt, der von dem ersten Leistenteil, dem zweiten Leistenteil, der ersten Rippe und der zweiten Rippe umgeben ist.

4. Verfahren zur Herstellung eines geschweißten Formteils nach einem der Ansprüche 1 bis 3, wobei eine Breite einer Oberseite des ersten Leistenabschnitts 90 % oder mehr und 110 % oder weniger einer Breite einer Oberseite des zweiten Leistenabschnitts beträgt.

5. Geschweißtes Formteil, das aufweist:
ein erstes Element (1); und
ein zweites Element (2),
wobei jedes des ersten und des zweiten Elements aus einem Flüssigkristallpolyester als Formmaterial hergestellt ist,
das geschweißte Formteil einen geschweißten Abschnitt (130) aufweist, der durch Heißschweißen des ersten Elements und des zweiten Elements gebildet ist
wobei das geschweißte Formteil **dadurch gekennzeichnet ist, dass**
der geschweißte Abschnitt einen geschweißten Hauptkörperabschnitt (131), in dem das erste Element und das zweite Element heißgeschweißt sind, und ein Paar Rippen (132, 133) aufweist, die an beiden Seiten des geschweißten Hauptkörperabschnitts vorgesehen sind,
ein röhrenförmiger Halteraum (130a) zwischen dem geschweißten Hauptkörperabschnitt und den Rippen ausgebildet ist,
der Halteraum mit Graten (139) aus dem Flüssigkristallpolyester gefüllt ist, und
die Füllrate der Grate in dem Halteraum in einem Querschnitt, der den geschweißten Hauptkörperabschnitt und das Paar Rippen schneidet, 20 % oder mehr und weniger als 100 % beträgt.

6. Geschweißtes Formteil nach Anspruch 5, wobei
die Zugfestigkeit eines geschweißten Abschnitts, in dem das erste Element und das zweite Element heißverschweißt sind, 13 MPa oder mehr beträgt.

7. Rohr (100), das das geschweißte Formteil nach Anspruch 5 oder 6 ist.

## Revendications

1. Procédé de fabrication d'un moulage soudé constitué de polyester à cristaux liquides comme matériau de formation, le procédé comprenant :
une étape consistant à chauffer chacune d'une première partie de crête (142) d'un premier élément (1) constitué du polyester à cristaux liquides en tant que matériau de formation et d'une deuxième partie de crête (152) d'un deuxième élément (2) constitué du polyester à cristaux liquides en tant que matériau de formation à une température égale ou supérieure à une température de début d'écoulement du polyester à cristaux liquides ; et
une étape consistant à mettre en butée la première partie de crête et la deuxième partie de crête l'une contre l'autre afin d'effectuer un soudage par vibration tout en pressant la première partie de crête et la deuxième partie de crête dans une direction dans laquelle la première partie de crête et la deuxième partie de crête sont amenées relativement près l'une de l'autre.

2. Procédé de fabrication d'un moulage soudé selon la revendication 1,
dans lequel le premier élément comprend
une première partie de base (141),
la première partie de crête faisant saillie à partir de la première partie de base, et
une paire de premières nervures (143, 144) prévues sur les deux côtés de la première partie de crête le long d'une direction d'extension de la première partie de crête et faisant saillie vers le même côté que la première partie de crête par rapport à la première partie de base,
le deuxième élément comprend
une deuxième partie de base (151),
la deuxième partie de crête faisant saillie à partir de la deuxième partie de base, et
une paire de deuxièmes nervures (153, 154) prévues sur les deux côtés de la deuxième partie de crête le long d'une direction d'extension de la deuxième partie de crête et faisant saillie vers le même côté que la deuxième partie de crête par rapport à la deuxième partie de base, et
dans l'étape consistant à effectuer le soudage par vibration, le premier élément et le deuxième élément sont rapprochés l'un de l'autre jusqu'à ce que la première nervure et la deuxième nervure viennent en butée l'une contre l'autre.

3. Procédé de fabrication d'un moulage soudé selon la revendication 2, dans lequel l'étape consistant à effectuer le soudage par vibration est terminée avant que la résine fondue ne s'échappe d'un espace entouré par la première partie de crête, la deuxième partie de crête, la première nervure et la deuxième nervure.

4. Procédé de fabrication d'un moulage soudé selon l'une quelconque des revendications 1 à 3, dans lequel la largeur d'une surface supérieure de la première partie de crête est comprise entre 90 % et 110 % de la largeur d'une surface supérieure de la deuxième partie de crête.

5. Moulage soudé comprenant :
un premier élément (1) ; et
un deuxième élément (2),
dans lequel chacun des premier et deuxième éléments est constitué d'un polyester à cristaux liquides comme matériau de formation,
le moulage soudé comprend une partie soudée (130) formée par soudage à chaud du premier élément et du deuxième élément,
le moulage soudé étant **caractérisé en ce que** :
la partie soudée comporte une partie principale soudée (131) dans laquelle le premier élément et le deuxième élément sont soudés à chaud, et une paire de nervures (132, 133) prévues des deux côtés de la partie principale soudée,
un espace de retenue tubulaire (130a) est formé entre la partie principale soudée et les nervures,
l'espace de retenue est rempli de bavures (139) formées à partir du polyester à cristaux liquides, et
le taux de remplissage des bavures dans l'espace de retenue est compris entre 20 % et 100 % dans une section transversale coupant la partie principale soudée et la paire de nervures.

6. Moulage soudé selon la revendication 5, dans lequel
la résistance à la traction d'une partie soudée dans laquelle le premier élément et le deuxième élément sont soudés à chaud est de 13 MPa ou plus.

7. Tuyau (100) qui est le moulage soudé selon la revendication 5 ou 6.
